# EUROPEAN PATENT SPECIFICATION

(11) **EP 1 658 606 B1**
(45) Date of publication and mention of the grant of the patent: **08.10.2014**
(21) Application number: 04780217.8
(22) Date of filing: 05.08.2004
(51) Int. Cl.: G06F 3/0354

(54) **ERGONOMIC MOUSE**
ERGONOMISCHE MAUS
SOURIS ERGONOMIQUE

(30) Priority: 05.08.2003 US 492773 P; 27.07.2004 US 901318
(43) Date of publication of application: 24.05.2006
(73) Proprietor: Willat, Boyd I., Culver City, CA 90232 (US)
(72) Inventor: Willat, Boyd I., Culver City, CA 90232 (US); Delgado, Gary, New York, NY 10027 (US)
(74) Representative: Ruschke, Hans Edvard
(86) International application number: PCT/US2004/025347
(87) International publication number: WO 2005/015348

(56) References cited:
- EP-A2- 0 757 327
- DE-U1- 20 017 711
- GB-A- 2 288 454
- US-A- 5 490 647
- US-A- 5 865 404
- US-A- 5 913 497
- US-A- 6 157 370
- US-A1- 2002 084 985
- US-A1- 2003 058 219
- US-A1- 2003 107 551
- US-B1- 6 193 196
- US-B2- 6 489 947
- US-S- D 375 729
- US-S1- D 355 901

## Description

### CROSS REFERENCE TO RELATED APPLICATIONS

This application is related to United States Provisional Patent Application Serial Number 60/492,773 filed August 5, 2003 for ERGONOMIC MOUSE and United States Patent Application filed July 27, 2004; serial number not yet assigned for ERGONOMIC MOUSE.

### BACKGROUND

Extended use of a computer-pointing device, such as a computer mouse, may cause a computer user to suffer from cumulative trauma disorder (CTD) or repetitive stress injuries (RSI). Computer users may often be afflicted with pains in the hands and the wrists that may be caused by excessive wrist movements such as flexion and hyperextension of the wrist. Computer users may also suffer from soreness and fatigue in the shoulders and the neck due to excessive arm and shoulder motions associated with use of computer-pointing devices.

Long periods of repetitive motion associated with the use of the computer mouse coupled with incorrect hand posture while using the mouse may cause disorders in the hand, wrist, elbow, shoulder, and neck, such as carpal tunnel syndrome, among others. Repetitive stress injuries, such as carpal tunnel syndrome, may be disabling and are costly to employers and employees alike, including both medical expenses and lost work time.

Furthermore, there are many different types of pointer control devices that include, but are not limited to, a touch pad, track ball, buttons, wheel and a stick. Typically a single type may be included with a mouse. This may present problems if a user prefers another type of device.

Accordingly, there is a need for a computer input system, such as, but not limited to, a computer mouse, which may reduce stress and help to prevent injuries while not impeding the productivity of the computer user. Further, it is desirable to provide more than one type of interchangeable pointing device controller, as desired by the user. Yet further what is needed is a system that may allow micro movements of the fingers of a user without having to move the entire hand, wrist and/or arm.

### SUMMARY

Provided are exemplary embodiments, which may include a system that may couple to a computer that may include a selectably interchangeable pointing device controller, and further may include an ergonomic design that may include a front portion and a rear portion where the front portion is configured to move horizontally and vertically with respect to the rear portion. Further may be included a computer device that may have a generally arch-like, ergonomic configuration. The scope of the invention is defined by the wording of claim 1.

### BRIEF DESCRIPTION OF THE DRAWINGS

Figure 1 is a perspective view of an exemplary embodiment of an input system.
Figure 2 is a perspective view of another exemplary embodiment of an input system.
Figure 3 is a perspective view of an input system according to an exemplary embodiment.
Figure 4 is a top view of the exemplary embodiment of Figure 3.
Figure 5 is a front elevation view of the exemplary embodiment of Figure 3.
Figure 6 is a side elevation view of an exemplary embodiment of an input system.
Figure 7 is a side elevation view of an exemplary embodiment of an input system.
Figure 8 is a perspective view on an exemplary embodiment of a computer device.
Figure 9 is a side view of the embodiment in Figure 8.
Figure 10 is a side view of an exemplary embodiment of a computer device.
Figure 11 is a top view of the embodiment in Figure 10.
Figure 12 is a side view of an exemplary embodiment of a computer device.
Figure 13 is a top view of the embodiment in Figure 12.
Figure 14 is a perspective view of a coupler according to an exemplary embodiment.

### DETAILED DESCRIPTION

The detailed description set forth below in connection with the appended drawings is intended as a description of exemplary embodiments and is not intended to represent the only forms in which the embodiments may be constructed and/or utilized. The description also sets forth the functions and the sequence of steps for constructing and operating the invention in connection with the illustrated embodiments. However, it is to be understood that the same or equivalent functions and sequences may be accomplished by different embodiments that are also intended to be encompassed within the spirit and scope of this disclosure.

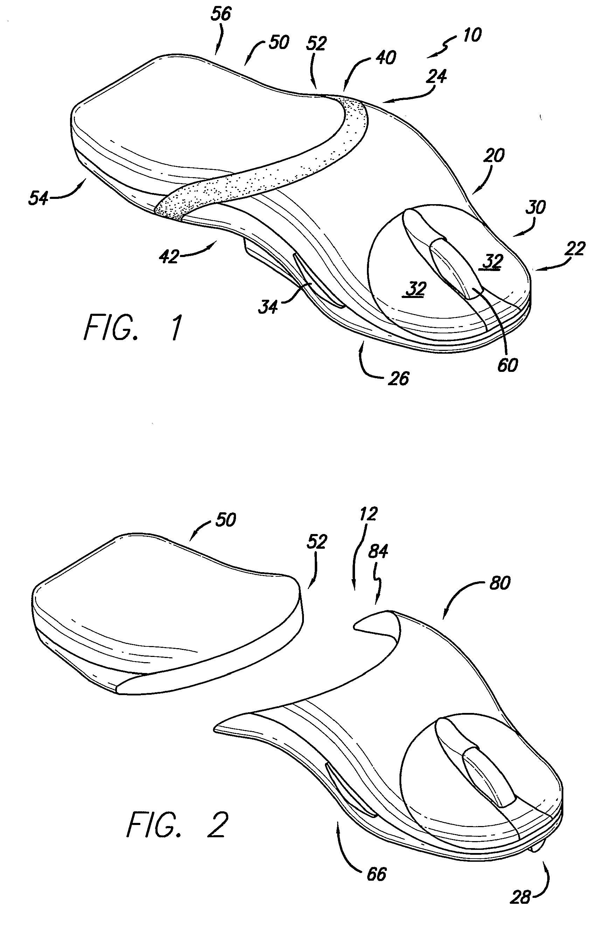

An input system according to an exemplary embodiment is shown in Figure 1, generally at **10.** System **10** may include a front portion **20** and rear portion **50**, with a middle portion **40** configured to couple the front portion **20** to rear portion **50.** System **10** may be contoured in an arch-like manner, thereby creating a recess **42** in the lower support contacting surface of the system **10.** With this arch-like configuration, the mouse may be more ergonomic and reduce repetitive stress injuries, and the like.

Middle portion **40** may be made of a flexible material such as foam, rubber, or other flexible material and/or configuration such that front portion **20** may move independently of rear portion **50**. Furthermore, other configurations for coupling front portion **20** to rear portion **50**, including, but not limited to, one or more springs, a double-scissors-type configuration, rods, tubes, etc., such that movement of front portion **20** is achievable with respect to rear portion **50**. With this configuration, a user may be able to make micro movements with the front portion **20** with respect to rear portion **50**, such that the entire wrist and arm may not need to move to move front portion **20**, and consequently, a cursor and/or pointer controlled by this system **10.**

Front portion **20** may include a front end **22** as well as a back end **24**. Furthermore, front portion **20** may include a surface contacting portion **26** that may be configured to contact a mouse pad or other support surface utilized by the input system **10** to control a pointing device. Front portion **20** may further include an input device portion **30** which may be interchangeable as described below. Input device portion **30** may include buttons **32** as well as side buttons **34** and wheel **60** to control the movements of a cursor or other pointing device, as desired.

Rear portion **50** may include a front end **52** and a rear end **54**. Rear end **54** may include a rest **56** configured to receive a user's hand, heel of the hand, or wrist to rest thereupon. Rest **56** is typically made from a flexible, soft rubber or gel-filled fabric; however, other comfortable materials and configurations may be utilized, as desired.

Front end **52** of rear portion **50** may be configured to generally correspond to the back end **24** of front portion **20,** such that it may be easier to move front portion **20** with respect to rear portion **50,** as desired. It will be appreciated that with this configuration that front portion **20** may move laterally as well as vertically and horizontally with respect to rear portion **50** due to flexible middle portion **40.** This may allow a user to accomplish micro movements while not moving their entire wrist and/or arm to move front portion **20** with respect to rear portion **50**, to control the pointing device and/or cursor controlled by this system.

Figure 1 may show the ergonomic design of system **10**, such that it may provide a soft support for the wrist and heel of a user's hand, and support the palm, heel of the hand, and hand, and allow the fingers to dangle over middle portion **40**, to front portion **20** to operate buttons **32**, side buttons **34**, and /or wheel **60**, or other devices as desired.

Figure 2 shows another exemplary embodiment of an input system, generally at **12**. System **12** may include a front portion **80** as well as a rear portion **50.** Front portion **80** may include a rear end **84** as well as a keel **28**. Keel **28** may allow the user to accomplish micro movements of the user's fingers and front portion **80**, without moving their wrist and entire arm by allowing front portion **80** to move vertically as well as horizontally with respect to rear portion **50** and/or the support surface. This may make it easier and less stressful to consequently control the corresponding cursor and/or pointing device.

System **12** may also include a rear portion **50** which may be configured to receive the wrist of a user comfortably to further reduce repetitive stress injuries. Furthermore, rear portion may include a front end **52** which may generally correspond to rear end **84** of front portion **80** to allow more freer movement of front portion **80** with respect to rear portion **50.** Furthermore, this configuration may enhance the use of the system **12** as well as help coordinate movements of front portion **80** with respect to rear portion **50.**

Front portion **80** may also include a lower surface **66**, which, with keel **28**, may be non-planar. With this non-planer lower surface configuration, it will be appreciated that horizontal as well as vertical movements may be made with front portion **80** micro movements, such that a user may move the pointing device without moving the entire wrist or arm. Furthermore, front portion **80** and rear portion **50** may have an arch-like configuration, which may allow the fingers of a user to dangle over front portion in a ergonomic manner, which may further reduce the likelihood of stress injuries from occurring.

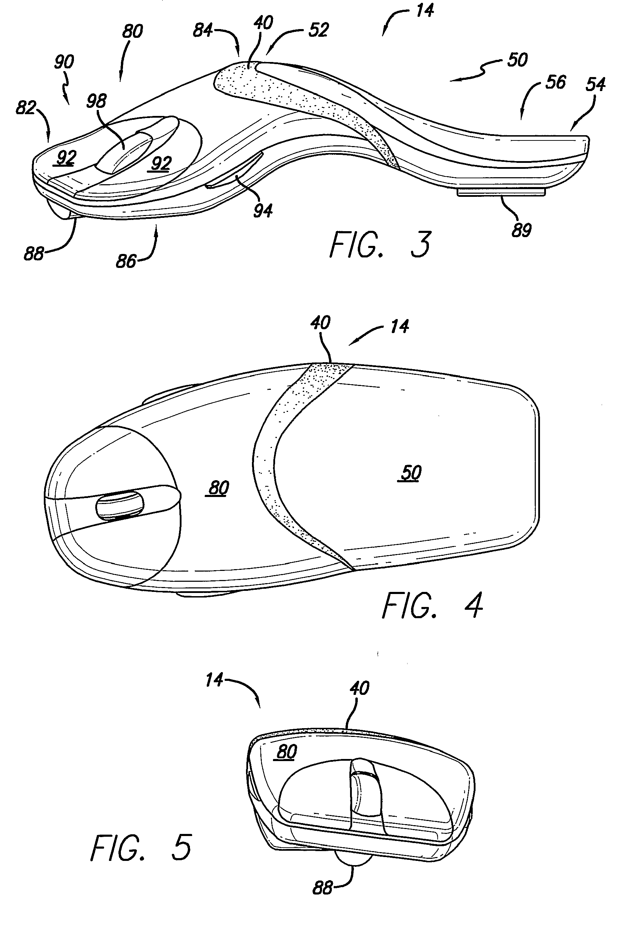

Figure 3 shows another exemplary embodiment of an input system, generally at **14**. System **14** may include a front portion **80** and a rear portion **50** coupled by a flexible middle portion **40**. In this figure, front portion **80** is shown coupled to middle portion **40,** which is flexed, such that front portion **80** has moved horizontally, vertically and rotationally with respect to rear portion **50**, without rear portion **50** being moved. Front portion **80** may include an input device portion **90,** which may include buttons **92** and wheel **98**. In this embodiment, front portion **80** may include a keel **88** to allow micro movements and/or vertical and/or horizontal and/or rotational movements of front portion **80** to control a cursor or other pointing device.

Front portion **80** may include a front end **82** and a rear end **84.** Rear end **84** may be configured to couple to flexible middle portion **40,** and to somewhat correspond to front end **52** of rear portion **50**. Rear portion **50** may include a rear end **54** as well as rest **56**, which may be configured to support the wrist of a user in a comfortable and ergonomic position. With this configuration of system **14** this again may allow a user to move front portion **80** with respect to rear portion **50** without rear portion **50** moving. Again the arch-like configuration as well as the flexible and micro movement-capable configuration of the system may reduce the likelihood of repetitive stress injuries occurring.

Rear portion **50** may include a keel portion **89**, which may allow rear portion to move horizontally, vertically and rotationally with respect to the support surface as well as front portion **80.** It will be appreciated that the size, shape, location, position and configuration of keel portions **88**, **89** may be altered to achieve different movements of the different portions, as desired. Although a generally half cylinder shape is shown for keel portions **88, 89** many other configurations, locations, etc. may be utilized without straying from the concepts disclosed herein.

Figure 4 shows a top view of the embodiment shown in Figure 3, generally at **14.** Again system **14** may include a front portion **80** and a rear portion **50** with a flexible middle portion **40.** In this embodiment, front portion **80** has been moved generally horizontally with respect to rear portion **50,** without rear portion **50** being moved. This figure shows the ability of front portion **80** to move horizontally with respect to rear portion **50.**

Figure 5 shows a front view of the embodiment of Figures 3 and 4, generally at **14.** In this figure, front portion **80** is shown moved generally vertically, as well as slightly horizontally with respect to rear portion **50** (not shown in this figure). Again, system **14** may include a keel **88** which may facilitate and enhance the vertical and horizontal movements of front portion **80** with respect to rear portion **50,** not shown. System **14** may again include a middle portion **40** which made be made of a flexible material such as foam, rubber, plastics, springs, and/or combination thereof, as desired.

It will be appreciated that although this system is shown generally as a computer mouse, other input systems are contemplated and encompassed by this disclosure. Furthermore, although a wireless mouse is shown, a wired mouse may be utilized without straying from the concepts disclosed herein.

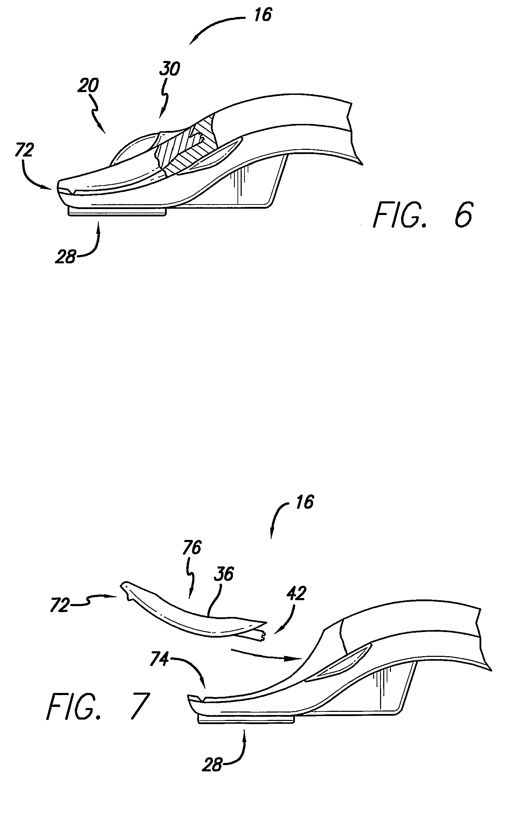

Figure 6 shows a side elevational view of a front portion **20** of an input system **16.** Front portion **20** may include an input device portion **30**, which may be selectively couplable and selectively removable from the system, such that many different input device portions **30** may be utilized, according to a user's preference, among other considerations. System **16** again may include a keel **28** which may allow vertical and horizontal micro movements of front portion **20** with respect to the rest of the system. Input device portion **30** may include a lip **72** which may be configured to couple to front portion **20** such that input device portion **30** may couple to front portion **20** of system **16.** It will be appreciated that other coupling configurations and methods may be utilized, as desired. With this configuration a user may be more likely to purchase the system as the input device portions **30** may be interchangeable, such that a user may use different input devices **30,** as desired.

Figure 7 shows another side elevational view of a system **16**, according to another exemplary embodiment. System **16** may include an input device portion **76** which may include a touch pad **36** that may be utilized by a user along with keel portion **28** to control the movements of the pointing device and/or cursor, as desired. System **16** may include a groove **74** which may correspond to lip **72** to allow input device portion **76** to couple to the rest of the system. It will be appreciated that other coupling configurations and methods may be utilized, as desired. Furthermore, input device portion **76** may include connector **42** which may be electrical-type to allow signals to pass to and from input device portion **76** to the rest of the system. Furthermore, connector **42** may also be mechanical in nature to allow for more secure coupling of input device portion **76** to the system. Input device portion **76** may also include a track pad, track ball, stick, and the like, or other device used for inputting information into a computer, such as a device to move a pointer, as desired.

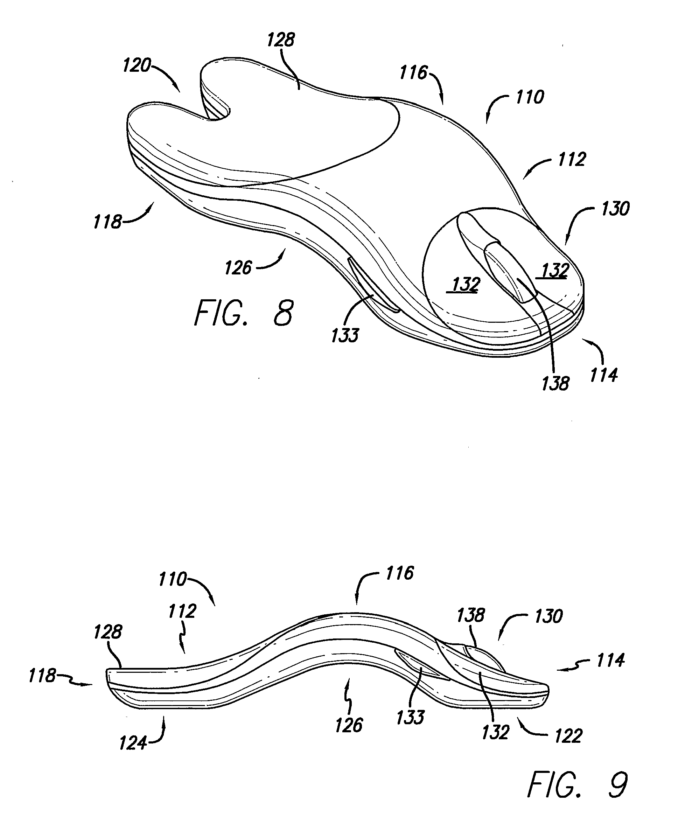

A computer device according to an exemplary embodiment is shown in Figure 8, generally at **110**. Device **110** may include a housing portion **112**, which may include a front portion **114**, a middle portion **116** and a rear portion **118**. Rear portion **118** may include a notch **120**. A user's hand, heel of the hand, and wrist may rest on rear portion **118** with the user's fingers dangling over the middle portion **116** and able to operate buttons **132** and wheel **138** in an ergonomic manner or position. The buttons may be near, or adjacent to, the front portion **114**. Front portion **114** may include an input device portion **130**, which may include buttons **132** and/or wheel **138**, or other input configurations. Input device portion **130** may also include a track pad, track ball, stick, or other device used for inputting information into a computer, such as a device to move a pointer.

Rear portion **118** may include a rest **128** that is configured such that a user's hand, heel of the hand, or wrist may rest thereupon. Rest **128** is typically made from a flexible, soft rubber or gel-filled fabric, however, other comfortable materials and configurations may be utilized, as desired.

Housing portion **112** may be curvilinearly contoured and may be formed with a recess **126**. Recess **126** may limit the amount of contact surface, may reduce the amount of contact friction the user may encounter while using the system, and may add to the aesthetics of the system. Device **110** may also include other actuators **133**, which may be further utilized as an input or other device.

Current devices may require that the user's wrist change in flex in varying degrees to operate the device. This new configuration may allow a user to not flex their wrist when using this device. This anti-flexure configuration may further reduce RSIs and other injuries without impeding the productivity of the user. It may increase the productivity and comfort of the user when using this device.

Figure 9 shows a side view of the exemplary embodiment in Figure 8. Again, device **110** may include a front portion **114**, middle portion **116**, rear portion **118** and a housing portion **112**. Front portion **114** may include a front contacting portion **122** that may be configured to slide across a mouse pad or desk, or other surface, as desired.

Rear portion **118** again may include a rest **128.** Rear portion **118** may also include a rear contacting portion **124** that is configured to move across a mouse pad, desk, or other surface. These portions or points **122** and **124** may be made of a hard, slick material, or may be lubricated such that it will slide easily across many surfaces, or may include ball bearings, or another configuration, as desired.

Device **110** also may include a recess **126** that may limit the amount of surface of the device contacting another surface such that it may more easily slide across another surface. Device **110** may include a roller ball or optical sensing system that may control the direction and/or movement of a cursor or pointer on a computer system corresponding to the movement and control of device **110**. Other input configurations may be utilized, as desired. Device **110** may include a cord (not shown), which may allow signals to pass to and from a computer, however device **110** may also be cordless, or may be another configuration, as desired.

Furthermore, the embodiment in Figure 9 may show the ergonomic design of device **110**, such that it may provide a soft support for the wrist and heel of a user's hand, and support the palm, heel of the hand, and hand and allow the fingers to dangle over middle portion **116**, to front portion **114** to operate buttons **132**, or other devices. Device **110** may be made with interchangeable input device portions, such that a track pad, a trackball, a stick, or other control device may be selectively interchangeable with wheel **138** and buttons **132,** such that if a user desires a particular type of input device, they may change it, as desired. In this manner, one device **110** may be utilized in many different configurations to provide control of a pointing device of a computer, and the like.

Notch **120** may be included to alleviate some pressure on the nerves of the wrist, and other portions of the user's body, such that cumulative trauma disorder, or carpel tunnel, or other types of injuries may be less likely to occur. Device **110** may be made of a hard plastic with inserts in the rear portion **118** and front portion **114** that are flexible, soft rubber, or silicone-filled fabric or other configurations, as desired, that may make the device more comfortable to use and reduce workplace cumulative stress injuries. Furthermore, device **110** may be more stylish than other mouse configurations such that a user will be more likely to purchase it. Furthermore, the interchangeability of input device portions **130** may make it attractive to a user, such that a user who may not have bought the item because of the type of pointing device controller, may be more likely to buy this device as it may have interchangeable pointing device portions. This design may enhance the user's enjoyment of the use of a computer and may be purchased because of its design alone.

Device **110** may be 1 - 10 inches long by 0.5 - 4.0 inches tall by 1.0 - 6.0 inches wide. It will be appreciated, however, that other dimensions and configurations may be utilized, as desired. Device **110** may be a mouse for a computer, but other types of hand furniture may be created with this same or similar design to reduce cumulative stress injuries, and be made to be attractive to consumers. Notch **120** may also reduce the amount of surface of the device that contacts with another surface such that device **110** may move over a surface more easily due to lack of contact surface between them. Recess **126** may be 10-90% of the total height of the system, and notch **120** may be 10-90% of the total width of the device.

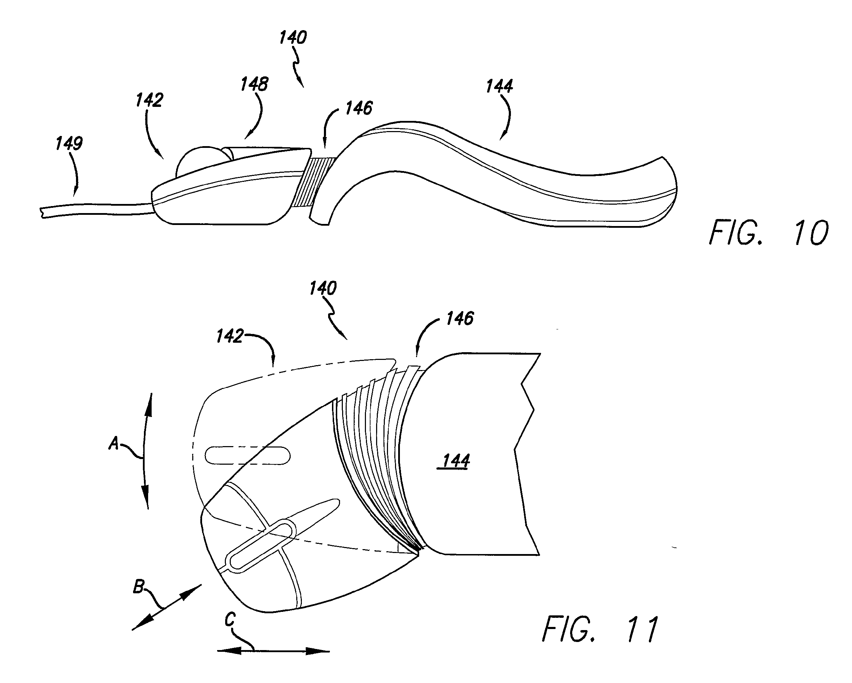

Figure 10 shows a side elevational view of an exemplary embodiment of a computer device system, generally at **140**. System **140** may include a front portion **142** as well as a rear portion **144** coupled via a middle portion **146**. Front portion **142** may include a pointing device controller **148** which may be configured to, in combination with system **140**, control the location and travel of a pointing device, such as a computer cursor. System **140** may further include a cord **149**. It will be appreciated that computer device **140** may also be wireless, as desired. Rear portion **144** may be configured to receive the wrist of a user as well as have a generally arch-like, ergonomic shape such that the fingers of a user may dangle over middle portion **146** onto front portion **142.** Middle portion **146** may be a flexible, accordion-like configuration such that it will allow movement of front portion **142** with respect to rear portion **144.** In this manner, a user may accomplish more ergonomic movements and thereby reduce repetitive stress injuries. It will be appreciated that although pointing device controller **148** is shown as a wheel and buttons, other controllers may be utilized including but not limited to a touch pad, joystick, buttons, or others controller as desired.

Figure 11 is a top view of the exemplary embodiment shown in Figure 10. Again, computer device system **140** includes a front portion **142** and a rear portion **144.** As shown, middle portion **146** is an accordion-type configuration such that front portion **142** may move with respect to rear portion **144.** With this configuration, front portion **142** may be moved in the direction shown by the directional arrows **A, B** and **C** with respect to rear portion **144.** It will be appreciated that rear portion **144** may not move at all, or may move slightly, or more. With this configuration, a more ergonomic use by the user may be achieved. Also as shown by directional arrow **B,** the entire front portion **142** may move away from and back toward rear portion **144,** as well as moving laterally, and other movements.

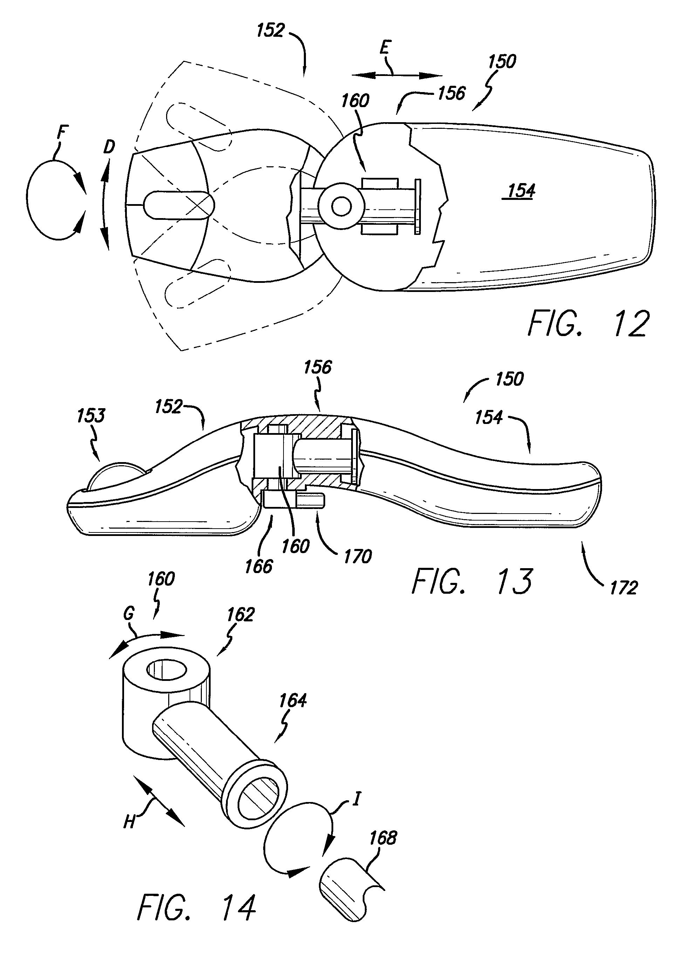

Figure 12 shows a top view of the embodiment of a computer device system shown in Figure 12, again generally at **150.** Figure 13 shows the front portion **152** moving laterally with respect to rear portion **154**. It will be appreciated that as shown by directional arrow **D**, front portion **152** may move laterally with respect to rear portion **154**. As shown by directional arrow **E**, front portion may extend completely away from and completely back toward rear portion **154** in a horizontal movement.

Pivoting portion **162** may couple to a corresponding portion **166** which may allow front portion **152** to couple thereto. Portion **166** may include a locking portion **170**, as shown in Figure 12, that may be configured to lock the position of front portion **152** with respect to rear portion **154.** With this configuration the system **152** may operate similarly to that of a generally rigid system.

Furthermore, as shown by rotational arrow **F,** front portion **152** may rotate with respect to rear portion **154.** With this configuration, micro movements may be accomplished by the user and movements of front portion **152** with respect to rear portion **154** may be more ergonomic and may reduce repetitive stress injury, and other injury.

Figure 13 is a side, elevational view of another embodiment of a computer device system, generally at **150.** System **150** may include a front portion **152** and a rear portion **154,** as well as a middle portion **156** which may allow movement of front portion **152** with respect to rear portion **154.** Again, rear portion **154** may be configured to receive the wrist of a user and may be configured, along with middle portion **156,** to allow the fingers of a user to dangle over the arch-like configuration and extend over front portion **152** to allow a user to utilize the controls **153** in a generally ergonomic manner. Middle portion **156** may include a coupling portion **160** as well as a corresponding coupling structure of rear portion. Furthermore, coupling configuration **160** may allow rotational, vertical, horizontal and lateral movement of front portion **152** with respect to rear portion **154.** With this configuration, rear portion **154** may remain substantially stationary while the user may move front portion **152** in many different directions. This movement of front portion may be in an ergonomic manner and may reduce repetitive stress injuries, among others.

Rear portion **154** may further include a contact point **172** that may allow a user to lift and /or otherwise move front portion **152** while rear portion **154** remains contacting the support surface at contact point **172.** This may allow a user to reposition the front portion, and consequently the pointing control without lifting the entire system off of the support surface. This may reduce "mouse slap" that occurs when a user lifts an entire mouse off of the support surface and repositions the mouse back upon the support surface in a different location.

Figure 14 shows a perspective view of a coupling structure **160** according to an exemplary embodiment. As shown, coupling structure **160** may have a pivot portion **162** as well as a sleeve portion **164.** Coupling structure **160** may also include a sleeve portion **164** which may be configured to couple to a corresponding structure **168** of rear portion **154** such that it will allow movement of rear portion **154** with respect to coupling structure **160.** Coupling structure **168** may extend into or around coupling configuration **160** such that it will allow movement of front portion **152** away from and back toward rear portion **154.** However it will be appreciated that other configurations may be utilized without straying from the spirit and scope of this disclosure.

As shown by directional arrows **G, H** and **I,** this will allow movement of front portion **152** in the vertical, horizontal, rotational and lateral directions with respect to rear portion **154.** It will be appreciated that although an accordion-type, a flexible material type, and a coupling structure **160** type have been shown within this disclosure, other configurations for a middle portions may be utilized which couple the front portions and the back portions to allow micro movements thereof, without straying from the concepts disclosed herein. These different configurations may include but are not limited to a scissors-type, one or more spring-type, flexible material type, accordion-type, a coupling structure type as shown in Figure 14, as well as many others without straying from the concepts disclosed herein. It will also be appreciated that more than one pivot point may be utilized to accomplish the general movements of the front portion with respect to the rear portion.

Furthermore, the middle portions may include rods and may have a variable resistance such that the different movements and different distances that front portion and rear portion are apart may correspond to different resistances. Furthermore, the systems disclosed herein may include a locking feature that would allow a user to lock the front portion with respect to the rear portion such that the system may be utilized similar to rigid computer device systems.

With this highly configurable, modular configuration, different types of pointing input device portions may be utilized with one system such that a user may be more likely to purchase the system. Furthermore with the overall ergonomic features of the various embodiments, repetitive stress injuries may be reduced. Furthermore, the various embodiments may allow for micro movements of the front portion with respect to the rest of the system. Furthermore, these vertical and horizontal micro movements may be similar to that of a stylus or writing pen, as desired.

Current devices may require that the user's wrist change in flexure in varying degrees to operate the device. This new configuration may allow a user to not flex their wrist when using this device. This anti-flexure configuration may further reduce RSIs and other injuries without impeding the productivity of the user. It may increase the productivity and comfort of the user when using this device.

Furthermore, the various embodiments may be more stylish than other mouse configurations such that a user will be more likely to purchase it. Furthermore, the interchangeability of input device portions may make it attractive to a user, such that a user who may not have bought the item because of the type of pointing device controller, may be more likely to buy this device as it may have interchangeable pointing device portions. This design may enhance the user's enjoyment of the use of a computer and may be purchased because of its design alone.

Embodiments disclosed herein may include a front and/or rear light that may be configured to illuminate the user's work area and/or a logo, and the like. Furthermore, embodiments disclosed herein may include a pointer control wheel that may move laterally to allow a user to move the view to the right or left on the page that the user may be working with.

The embodiments disclosed herein may be 1 - 10 inches long by 0.5 - 4.0 inches tall by 1.0 - 6.0 inches wide. It will be appreciated, however, that other dimensions and configurations may be utilized, as desired. The embodiments disclosed herein may be a mouse for a computer, but other types of hand furniture may be created with this same or similar design to reduce repetitive and/or cumulative stress injuries, among others, and be made to be attractive to consumers.

The various rear portions may be designed with materials having characteristics including the ability to displace proportionally to the user's hand or wrist given the weight of the user's hand or wrist thereby providing for a custom user fit every time the device is used. It is also contemplated that the rear portions may be designed with materials that will provide displacement memory during each use of the device for a period of 1-10 seconds, for example, after the user's hand and wrist are removed from the device. The rear portion may be designed with materials that are body heat responsive to an individual user's body temperature. The device may also include a set of user-definable macros that may permit the user to perform repetitive tasks, such as pointing the device and depressing the buttons or similar action, with ease and minimal effort.

While the embodiments disclosed herein may be presented for a right-handed person, it will be appreciated that a similar device may be configured for a left-handed person. In addition, the size of the device may be adjusted to accommodate a range of sizes in the human hand. It will be appreciated that the device may be made in a range of sizes that may vary from a generally smaller device for small children through a larger device for adults with exceptionally large hands, as desired.

In closing, it is to be understood that the exemplary embodiments described herein are illustrative of the principles of the present disclosure. Other modifications that may be employed are within the scope of the disclosure. Thus, by way of example, but not of limitation, alternative configurations may be utilized in accordance with the teachings herein. Accordingly, the drawings and description are illustrative and not meant to be a limitation thereof.

## Claims

1. An ergonomic computer input system (10, 14, 16) comprising:
a mouse having a front portion (20, 80), a rear portion (50), and a middle portion (40) connected therebetween and cooperating with said front and rear portions to define an arched configuration with said middle portion disposed at a higher elevation than said front portion, and **characterized in that**:
said middle portion (40) is flexible,
said front portion has a surface contacting portion for contacting an underlying support surface, and
wherein the front end (52) of rear portion (50) is configured to correspond to the back end (24) of the front portion (20, 80), wherein the front portion (20, 80) is movable laterally as well as vertically and horizontally with respect to the rear portion (50) due to the flexible middle portion (40).

2. The ergonomic computer input system (10, 14, 16) of claim 1 wherein said mouse further defines a laterally open recess (42) underlying said middle portion (40) and disposed between said front portion (20) and said rear portion (50).

3. The ergonomic computer input system (10, 14, 16) of claims 1 or 2 wherein said surface contacting portion comprises a keel (28, 88) configured to contact a support surface.

4. The ergonomic computer input system (10, 14, 16) of claim 1 further including a selectively interchangeable input device (30, 90, 76) configured to be selectively mounted onto said front portion (20).

5. The ergonomic computer input system (10, 14, 16) of claim 1 wherein said middle portion (40) is formed from a flexible material to accommodate horizontal and vertical movement of said front portion (20) relative to said rear portion (50).

## Patentansprüche

1. Ergonomisches Computereingabesystem (10, 14, 16), umfassend:
eine Maus mit einem Frontteil (20, 80), einem Endteil (50), und einem dazwischen geschalteten und mit den Front- und Endteilen zusammenwirkenden Mittelteil (40) zur Definition einer gewölbten Anordnung mit dem Mittelteil, der an einer höheren Erhebung als der Frontteil angeordnet ist und **dadurch gekennzeichnet, dass**
das Mittelteil (40) flexibel ist,
das Frontteil einen Oberflächenkontaktierungsteil zum Kontaktieren einer darunterliegenden Auflagefläche aufweist, und
wobei der vordere Teil (52) des Endteils (50) konfiguriert ist, um mit dem hinteren Ende (24) des Frontteils (20, 80) zu korrespondieren, wobei der Frontteil (20, 80), bedingt durch den flexiblen Mittelteil (40), bezüglich des Endteils (50) sowohl seitlich als auch vertikal und horizontal beweglich ist.

2. Ergonomisches Computereingabesystem (10, 14, 16) nach Anspruch 1, wobei die Maus weiter einen unter dem Mittelteil (40) liegenden und zwischen dem Frontteil (20) und dem Endteil (50) angeordneten seitlich offenen Ausschnitt (42) definiert.

3. Ergonomisches Computereingabesystem (10, 14, 16) nach Anspruch 1 oder 2, wobei der Oberflächenkontaktierungsteil einen Kiel (28, 88) umfasst, der zum Kontakt der Auflagefläche ausgebildet ist.

4. Ergonomisches Computereingabesystem (10, 14, 16) nach Anspruch 1, weiter umfassend ein selektiv austauschbares Eingabegerät (30, 90, 76), das zum selektiven Befestigen auf dem Frontteil (20) ausgebildet ist.

5. Ergonomisches Computereingabesystem (10, 14, 16) nach Anspruch 1, wobei der Mittelteil (40) aus einem flexiblen Material besteht, um sich horizontaler und vertikaler Bewegung von dem Frontteil (20) relativ zu dem Endteil (50) anzupassen.

## Revendications

1. Système d'entrée d'ordinateur ergonomique (10, 14, 16) comprenant :
une souris ayant une partie avant (20, 80), une partie arrière (50) et une partie centrale (40) reliée entre celles-ci et coopérant avec lesdites parties avant et arrière pour définir une configuration en arc avec ladite partie centrale disposée à une hauteur plus grande que ladite partie avant, et **caractérisé en ce que** :
ladite partie centrale (40) est souple,
ladite partie avant a une partie de contact de surface pour venir en contact avec une surface de support sous-jacente,
et
dans lequel l'extrémité avant (52) de la partie arrière (50) est configurée pour correspondre à l'extrémité arrière (24) de la partie avant (20, 80),
dans lequel la partie avant (20, 80) est mobile latéralement ainsi que verticalement et horizontalement par rapport à la partie arrière (50) en raison de la partie centrale souple (40).

2. Système d'entrée d'ordinateur ergonomique (10, 14, 16) selon la revendication 1, dans lequel ladite souris définit en outre un évidement latéralement ouvert (42) sous-jacent à ladite partie centrale (40) et disposé entre ladite partie avant (20) et ladite partie arrière (50).

3. Système d'entrée d'ordinateur ergonomique (10, 14, 16) selon les revendications 1 ou 2, dans lequel ladite partie de contact de surface comprend une quille (28, 88) configurée pour venir en contact avec une surface de support.

4. Système d'entrée d'ordinateur ergonomique (10, 14, 16) selon la revendication 1, incluant en outre un dispositif d'entrée sélectivement interchangeable (30, 90, 76) configuré pour être sélectivement monté sur ladite partie avant (20).

5. Système d'entrée d'ordinateur ergonomique (10, 14, 16) selon la revendication 1, dans lequel ladite partie centrale (40) est formée à partir d'un matériau souple pour permettre un mouvement vertical et horizontal de ladite partie avant (20) par rapport à ladite partie arrière (50).
